# EUROPEAN PATENT SPECIFICATION

(11) **EP 4 002 823 B1**
(45) Date of publication and mention of the grant of the patent: **26.07.2023**
(21) Application number: 20839815.6
(22) Date of filing: 30.06.2020
(51) Int. Cl.: H04N 1/60, G06F 9/451, G06F 3/147, G09G 3/20, G06F 9/445, H04N 9/68, G06T 7/90

(54) **IMAGE INFORMATION PROCESSING METHOD, APPARATUS, AND STORAGE MEDIUM FOR DISPLAY GAMUT ADAPTATION TO A DISPLAY INTERFACE**
BILDINFORMATIONVERARBEITUNGSVERFAHREN, VORRICHTUNG UND SPEICHERMEDIUM FÜR DIE ANPASSUNG DES DISPLAY-GAMUTS AN EINE DISPLAY-SCHNITTSTELLE
MÉTHODE DE TRAITEMENT D'INFORMATIONS D'IMAGE, APPAREIL ET SUPPORT DE STOCKAGE POUR L'ADAPTATION DU GAMUT D'AFFICHAGE À UNE INTERFACE GRAPHIQUE

(30) Priority: 17.07.2019 CN 201910647084
(43) Date of publication of application: 25.05.2022
(73) Proprietor: GUANGDONG OPPO MOBILE TELECOMMUNICATIONS CORP., LTD., Dongguan, Guangdong 523860 (CN)
(72) Inventor: HU, Jie, Dongguan, Guangdong 523860 (CN); ZHOU, Haitao, Dongguan, Guangdong 523860 (CN)
(74) Representative: Ipside
(86) International application number: PCT/CN2020/099086
(87) International publication number: WO 2021/008345

(56) References cited:
- EP-A1- 3 125 547
- EP-A2- 2 610 842
- CN-A- 105 118 026
- CN-A- 108 184 037
- CN-A- 109 215 578
- CN-A- 110 021 256
- CN-A- 110 377 390
- CN-A- 110 378 973
- CN-A- 110 378 973
- CN-A- 110 413 360
- CN-A- 110 413 360
- US-A1- 2009 040 542
- US-A1- 2017 301 275

## Description

### TECHNICAL FIELD

The present application relates to the technical field of image processing technologies, and in particular, to an image information processing method, an apparatus, and a storage medium.

### BACKGROUND

With the development of society, an application range of electronic devices with screens has been continuously expanding. For example, screens are used to display interfaces, videos, and other images. Related electronic devices may not respond well to display effect when interfaces are designed, resulting in poor user experience.

The EP patent application No. EP2610842 teaches a display apparatus. The display apparatus includes an input unit which receives an image signal, a display panel unit, a determination unit which determines a color gamut of the image signal, an adjustment unit which adjusts a color gamut of the display panel unit based on the color gamut of the image signal, and a control unit which controls the display panel unit to display the image signal within the adjusted color gamut of the display panel unit.

The US patent application No. US2017301275 teaches a display device capable of adjusting the color gamut and methods of adjusting the color gamut thereof are disclosed. A method includes: obtaining a mapping table that comprises mapping relations between a plurality of application scenarios and a plurality of color gamut modes; obtain a current application scenario and the corresponding color gamut mode of the current application scenario from the mapping table, and adjusting the display screen to the corresponding color gamut mode of the current application scenario. Thus, the present disclosure can base on different application scenarios to automatically apply the corresponding color gamut modes, ensuring the user a plurality of color experiences and improving the experience effect of the users.

The EP patent application No. EP3125547 teaches a method and a device for switching color gamut mode, the method comprising: acquiring (S100) a picture to be displayed; determining (S 101) a picture type to which the picture to be displayed belongs; acquiring (S102) a current color gamut mode currently adopted by a terminal, each color gamut mode having a picture type with which it matches; and if the picture type to which the picture to be displayed belongs does not match the current color gamut mode, switching (S103) the current color gamut mode to a color gamut mode which matches the picture type to which the picture to be displayed belongs. Embodiments of the disclosure realize switch of color gamut automatically, and meanwhile, adopt a matching color gamut mode based on a picture type to display a picture, enabling the displayed picture to possess colors desired for a user, which improves use experience of the use.

### SUMMARY OF THE DISCLOSURE

In view of the above problem, the present application provides an image information processing method, an apparatus, and a storage medium to overcome the above problem.

In a first aspect, the present application provides an image information processing method as set out in the appended claim 1. The dependent claims define advantageous embodiments.

In a second aspect, the present application provides an image information processing apparatus as set out in the appended claim 11.

In a third aspect, the present application provides a computer-readable storage according to claim 12.

### BRIEF DESCRIPTION OF THE DRAWINGS

In order to describe technical solutions in embodiments of the present application more clearly, drawings required being used in description of the embodiments will be simply introduced below. Obviously, the drawings in the following description are merely some embodiments of the present application. For one of ordinary skill in the art, it is also possible to obtain other drawings according to these drawings without paying any creative work.
FIG. 1 shows a diagram of an image processing environment provided by an embodiment of the present application.
FIG. 2 shows a flow chart of an image information processing method provided by an embodiment of the present application.
FIG. 3 shows a schematic view of control-class objects in another image information processing method provided by an embodiment of the present application.
FIG. 4 shows a flow chart of an image information processing method according to the claimed invention.
FIG. 5 shows a schematic view of a blank area in an image information processing method provided by another embodiment of the present application.
FIG. 6 shows a flow chart of an image information processing method provided by further another embodiment of the present application.
FIG. 7 shows a structural block diagram of an image information processing apparatus provided by an embodiment of the present application.
FIG. 8 shows a structural block diagram of another image information processing apparatus provided by another embodiment of the present application.
FIG. 9 shows a structural block diagram of an electronic device of the present application, which is configured to execute an image information processing method according to an embodiment of the present application.
FIG. 10 is a storage unit of an embodiment of the present application, which is configured to store or carry program codes implementing an image information processing method according to an embodiment of the present application.

### DETAILED DESCRIPTION

With improvement of hardware performance of electronic devices, interfaces of more electronic devices use interfaces with higher definition as the interface background interfaces, or colors of interfaces are designed to be richer and more colorful. However, the inventor has found in research that, in addition to information of an interface itself, factors that affect display effect of the interface further include a degree of matching between information configured for the interface and a screen on which the interface is displayed.

Color gamut space is taken as an example. Color gamut is just the color gamut space, which is a method of encoding colors, and also refers to the sum of colors that can be produced by a technical system. In computer graphics processing, the color gamut is a certain complete subset of colors. The color gamut space may include sRGB color gamut, Adobe RGB color gamut, or DCI-P3 color gamut. Among them, sRGB is one of the earliest color gamut standards and obtain support by W3C, Exif, Intel, Pantone, Corel and many other industry manufacturers from the industry. The Adobe RGB color gamut mainly improves display on the cyan system, so it can cover about 50% of the CIE 1931 XYZ color space. DCI-P3 is a color gamut used in digital cinemas. It is a color gamut standard dominated by human visual experience, and matches all color gamuts that can be shown in movie scenes as much as possible. It is not the widest color gamut standard (currently the latest standard is BT.2020), but is above Rec.709 standard and has a wider range of red/green series.

The inventor has found that when color gamut space configured for an interface is inconsistent with color gamut space of a screen, directly displaying an interface with inconsistent color gamut space on the screen will cause that display effect of an original designed interface is unable to be displayed. For example, when an interface corresponding to a wider color gamut space is displayed on a screen corresponding to a narrower color gamut space, the displayed interface will become more oversaturated. When an interface corresponding to a narrower color gamut space is displayed on a screen corresponding to a wider color gamut space, the displayed interface will become dimmer.

Therefore, in order to improve the above problem, the inventor proposes an image information processing method, an apparatus, an electronic device, and a storage medium provided by the present application, which can realize that: regardless of the kind of the color gamut space of the target interface that will be shown, it is possible to show the target interface in the most realistic state, thereby improving user experience.

An environment for running an embodiment of the present application is first introduced below.

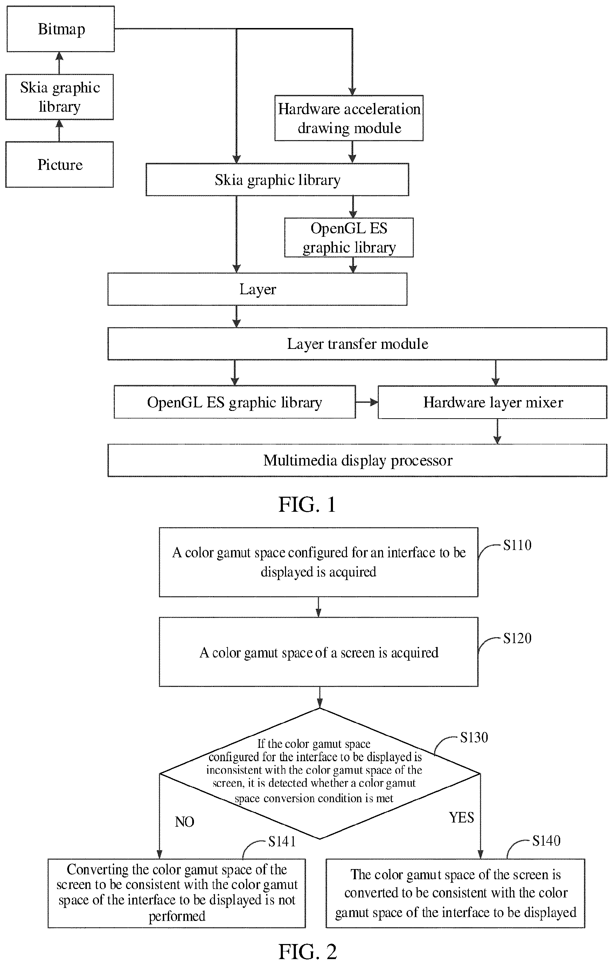

As shown in FIG. 1, in an embodiment of the present application, color gamut conversion processing in an interface (such as activity) is performed in Canvas; the interface which will perform color gamut conversion will be first processed by a graphics processing function library (Skia) to obtain a corresponding bitmap, and then perform color gamut conversion based on the bitmap. In the color gamut conversion process, the color gamut conversion will be first performed based on a hardware accelerated drawing (rendering) module (HWUI) or the graphics processing function library (Skia), then the interface is processed by OpenGL ES (a graphics library), a layer module (Surface), a layer transfer module (Surface Flinger), a hardware layer mixer (HWC) and a multimedia display processor (MDP), and finally displayed on a screen.

Content of the present application will be introduced with reference to specific embodiments below.

Referring to FIG. 2, an image information processing method provided by the present application is applied to an electronic device with a screen, wherein the screen supports displaying images based on multiple kinds of color gamut spaces; the method comprises the follows.

Operation S 110: a color gamut space configured for a target interface is acquired.

In this embodiment, the target interface is an interface to be displayed; multiple kinds of interfaces can be used as the target interface. A color gamut space configured for the target interface can be a color gamut space of the target interface, and may also be a color gamut space corresponding to the target interface.

As a way, an interface that is not displayed in an application, such as a desktop background, a startup interface, etc., can be used as the target interface.

As another way, a target interface by a target application is used as the target interface. Among them, the target application is an application currently running in the foreground. It is understandable that, during a running process, the application can automatically perform switching for interfaces, or perform switching for interfaces in response to a manual operation of a user. Thus, the electronic device can use an interface which is switched to during the interface switching process as the target interface. For example, an application running in the foreground currently displays an interface A, then after detecting that a user has triggered an operation for displaying an interface B, the electronic device will use the interface B as the target interface.

Furthermore, as yet another way, the target application may be an application to be started. It is understandable that after the application is started, a preset homepage interface will be displayed. In this case, the target interface is the homepage interface displayed by the application to be started after being started.

Among them, in this case that the target interface is the interface to which the application belongs, each interface can be individually configured with a corresponding color gamut space, or a color gamut space can be configured for all interfaces in a unified manner.

For example, if an application includes an interface A, an interface B, and an interface C, it is possible to configure the interface A to correspond to the sRGB color gamut, configure the interface B to correspond to the Adobe RGB color gamut, and configured the interface C to correspond to the DCI-P3 color gamut. Of course, the color gamut corresponding to each interface is not limited to the above manner, for example, it is also possible to configure the interface A to correspond to the DCI-P3 color gamut, configure the interface B to correspond to the sRGB color gamut, and configured the interface C to correspond to the Adobe RGB color gamut.

As a way, a configuration file can be established to store the color gamut space corresponding to each interface, and the configuration file can be encapsulated in the installation file of the application, for example, in the apk file of the Android system. In this way, the electronic device can obtain the color gamut space of each interface in the application by reading the configuration file of the application.

It should be noted that the configuration files of some applications can only allow the applications themselves to access. In this case that the color gamut spaces of the interfaces of the applications are stored by the configuration files, the electronic device may not effectively obtain the color gamut space configured for each interface in the application. In this case, it is possible to establish a public configuration file that can be accessed by third-party applications, other than the system program, in the electronic device. The public configuration file can be used to store some non-confidential information, for example, the developer of the application, the version number of the application, or the color gamut space configured for the application, etc. Then in this way, when it is detected that an application is installed, the installed application can take the initiative to store the developer of its own application, the version number of the application, or the color gamut space configured for the application into the public configuration file. Of course, when storing, an identifier of the application is also stored so that the application to which the information stored in the public configuration file belongs can be identified. Among them, the identifier of the application may be a package name.

Thus, based on the above method, when the electronic device needs to obtain the color gamut space of a certain interface of a certain application, this can be realized by querying the aforementioned public configuration file, so that even in the case that the electronic device cannot directly obtain the configuration file of the application itself, the color gamut space configured for each interface in the application can still be obtained.

It should be noted that the information stored in the aforementioned public configuration file is not limited to the aforementioned exemplarily mentioned developer of the application, version number of the application, or color gamut space configured for the application, and may also include more information. For example, it may also include permission information that is required to be obtained by the application.

Operation S 120: a color gamut space of a screen is acquired.

As one way, it is possible to configure a file in the system of the electronic device to store the current color gamut space of a screen. Thus, in this way, the electronic device can obtain the color gamut space of the screen by means of reading the file.

Operation S 130: if the color gamut space configured for the target interface is inconsistent with the color gamut space of the screen, it is detected whether a color gamut space conversion condition is met.

Operation S 140: if the color gamut space conversion condition is met, the color gamut space of the screen is converted to be consistent with the color gamut space of the target interface.

Operation S141: if the color gamut space conversion condition is not met, converting the color gamut space of the screen to be consistent with the color gamut space of the target interface is not performed.

It should be noted that there can be multiple kinds of color gamut space conversion conditions in embodiments of the present application.

As one way, a color gamut space conversion condition represents whether resources of a current electronic device allow color gamut conversion. It is understandable that the color gamut space conversion of the electronic device requires processor resources and power resources. Then in this manner, the color gamut space conversion condition may be that when the current processing resources of the electronic device are relatively tight or the power is relatively low, the color gamut space conversion is not allowed. It is understandable that a method of configuring a threshold can be used to enable the electronic device to detect whether the current processing resources are relatively tight or the power is relatively low. For example, a CPU occupancy rate threshold can be configured for processing resources. When the electronic device detects that a current CPU occupancy rate is higher than the aforementioned occupancy rate threshold, it indicates that the current CPU is running under high load, and then it is determined not to perform color gamut conversion. Similarly, a low power threshold can also be configured for the power. When the electronic device detects that the current power is lower than the aforementioned low power threshold, it indicates that the current power is low, and then it is determined not to perform color gamut conversion.

As another way, the color gamut space conversion condition represents whether a current electronic device has started performing color gamut conversion.

Optionally, whether to start performing color gamut space conversion may be for the overall situation of the electronic device, and can also be for a certain single application. In the manner for a certain single application, an electronic device can set a configuration interface, so that a user can control which application can start color gamut conversion when displaying an interface, and which application will not start color gamut conversion when displaying an interface. For applications that can and cannot perform color gamut conversion configured in the interface, they can be distinguished by means of creating a list.

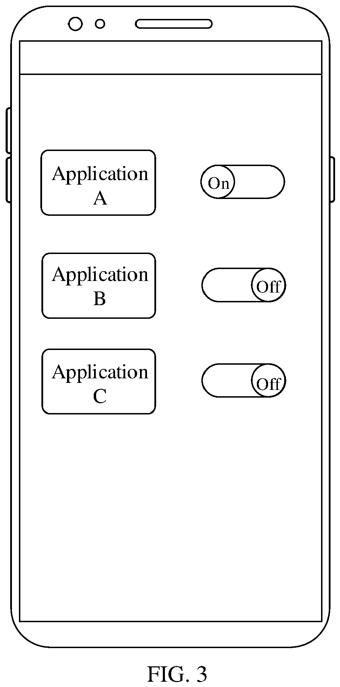

For example, as shown in FIG. 3, a plurality of applications and a state of a control corresponding to each application are displayed in the interface shown in FIG. 3. It is understandable that if a state of a control corresponding to an application is "OFF" as shown in the figure, it means that the application is removed or not added into the above list. If a status of a control corresponding to an application is "ON" as shown in the figure, it means that the application is added into the above list. For example, for an application named "Application A", a state of its corresponding control is "ON", this means that the application "Application A" will exist in the aforementioned list. For the application named "Application B", a state of its corresponding control is "OFF", then this means that the application "Application B" will not exist in the aforementioned list. It is understandable that an application existing in the list indicates that color gamut conversion will be stated when an interface is displayed.

Among them, it is understandable that the electronic device can establish a variable, and then use a variable value to identify a state of a control. For example, if the variable value is 0, it means that a control is in a state representing that color gamut conversion is turned off; and if the variable value is 1, it means that a control is in a state representing that color gamut conversion is turned on. Then in this case, when the electronic device detects that it is in a video playing state, it can detect the variable value to determine a state of a control.

Optionally, the variable value can be stored in a data table established in advance. In this case, when the electronic device detects that it is in a video playing state, it can obtain the aforementioned variable value by looking up the table, and then determine a state of a control.

In addition, when a certain application is installed in the electronic device, a storage location of its corresponding configuration file is relatively fixed. As another way, the variable value can also be stored in the configuration file of a corresponding video playback application. In this case, when the electronic device detects that a video playback application is installed, and detects that the installed video playback application is set as a default video playback application, it can find any file in a txt format in a configuration folder of the video playback application, then add a variable into the found file in a txt format, and use a value of the variable as the aforementioned variable value. In this way, it is possible to use the configuration file of the application itself to realize state detection of the control without adding new files, and because the configuration file of the application itself is used, a state of control corresponding to a certain application can be distinguished well.

In this case, in order to avoid influence on original functions of configuration files, as one way, its is possible to add a variable into a configuration file in the form of comments. For example, for a file in a txt format, characters beginning with "//" or "/*" are used to comment content. Then in this case, when a variable configured for the electronic device is hqv, content inserted into the txt file can be "//hqv=1", which means that color gamut conversion is turned on.

It should be noted that after some applications are updated or reinstalled, their corresponding configuration files will be modified or replaced by other files. Then in this case, if it is detected that a set application is updated or reinstalled, it is possible to first detect whether a previously selected file in a txt format still exists. If it exists, it is further detected whether a previously inserted variable can be read in the previously selected txt file corresponding to the updated or reinstalled application; if the reading fails, the variable is inserted again in the aforementioned manner. If it is detected that the previously selected file in a txt format does not exist, a txt file is reselected.

The above content is illustrated below through a specific application.

When the electronic device detects that the application named Application A is installed, it will further detect whether the Application A is configured as an application in the aforementioned list. If it is detected that the Application A is configured as an application in the aforementioned list, the electronic device then will further search for files in a txt format from a folder storing configuration files of the Application A. After any file with a name of tx.txt is searched, a piece of data will be inserted into the tx.txt, wherein content of the data is "//hqv=1", which indicates that a control corresponding to the Application A is in a state representing that color gamut conversion is turned on. Thus, when it is correspondingly detected that the control corresponding to the Application A is touched, the electronic device will correspondingly amend the originally inserted content into "//hqv=0", so as to indicate that the control corresponding to the Application A is in a state representing that color gamut conversion is turned off.

Thus, when the electronic device detects that Application A is updated or reinstalled, it will detect whether the file tx.txt still exists in the configuration file corresponding to the Application A; if it exists, it is further detect whether the content "//hqv=1" or "//hqv=0" can still be read from tx.txt; if can, it is represented that the previous configuration is still available; if it cannot be read, "//hqv=1" is inserted into tx.txt as default. If the electronic device finds that the tx.txt file cannot be found, a txt file can be reselected.

It should be noted that the selected variable storage file corresponding to each application can be stored in the electronic device in the form of a data table for the electronic device to search. It should be noted that the aforementioned files in a txt format and variable values are all exemplary, and the present application does not make specific limitations. The electronic device can specifically set according to format files that can be found. For example, it is also possible to use files in an xml format to store variable values.

Thus, in this case, the electronic device can first detect which application is currently running in the foreground, and then further detect whether the application currently running in the foreground is in the list, if it is, then it is determined that it is currently in a video playback state. Among them, as one way, if the electronic device has an Android operating system, a name of the application currently running in the foreground can be obtained by executing the getRunningTasks method of the ActivityManager. In addition, the electronic device can also obtain a list of applications used by a user through the UsageStatsManager, and identify the most recently used application recorded in the list as the current foreground application. Furthermore, it is also possible to monitor change of a window focus through Android's own barrier-free function, and get a package name corresponding to a focused window as the application currently running in the foreground.

As yet another way, the color gamut space conversion condition can represent whether it is currently necessary to perform color gamut space conversion. Even though color gamut space conversion is not performed, a target interface can still be enabled to display good realness.

The color gamut space conversion condition includes that: a saturation of the target interface is lower than a specified saturation value, and a color gamut space range of the target interface is smaller than a color gamut space range of a screen. It is understandable that when a corresponding interface with a narrower color gamut space is directly displayed on a screen with a wider color gamut space, it may result in that the interface appears dim. However, if a saturation of the interface itself is higher, the high saturation can offset the dim effect, thereby make the display effect of the interface not become worse or lose authenticity even more.

The color gamut space conversion condition, besides including the above manner, and may also include that the saturation of the target interface is greater than a specified exposure degree value, and the color gamut space range of the target interface is greater than the color gamut space range of the screen.

In the image information processing method provided by the present application, by acquiring a color gamut space of a target interface and acquiring a color gamut space of a screen, the color gamut space of the target interface is compared with the color gamut space of the screen; if the color gamut space of the target interface is inconsistent with the color gamut space of the screen, and a color gamut space conversion condition is met, the color gamut space of the screen is converted to be consistent with the color gamut space of the target interface. By the method, regardless of the kind of the color gamut space of the target interface that is to be presented, the target interface can be presented in the most realistic state, such that the user experience is improved.

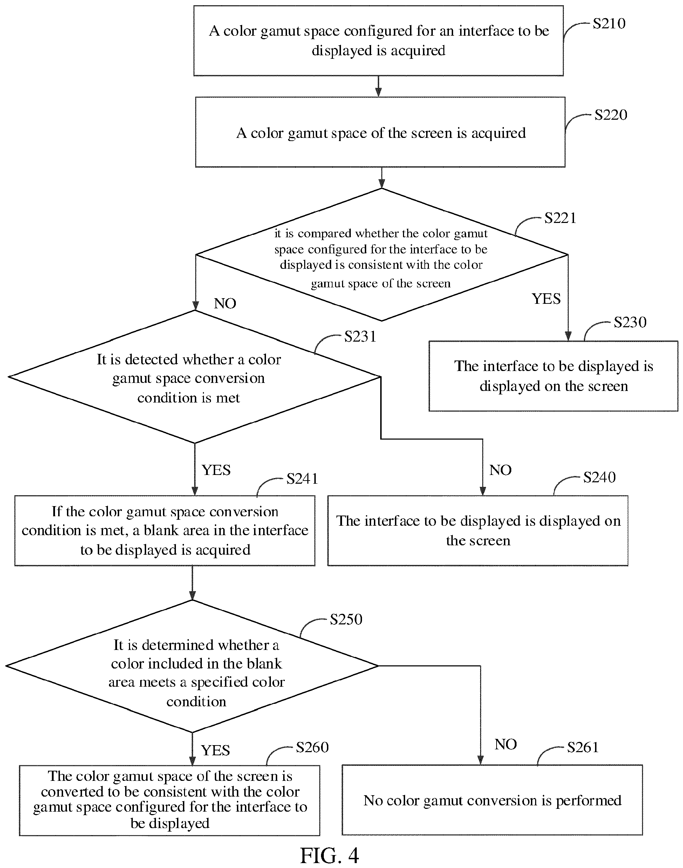

Referring to FIG. 4, an image information processing method provided by the present application is applied to an electronic device with a screen, wherein the screen supports displaying images based on multiple kinds of color gamut spaces; the method includes the follows.

Operation S210, a color gamut space configured for a target interface is acquired.

Operation S220, a color gamut space of the screen is acquired.

Operation S221, it is compared whether the color gamut space configured for the target interface is consistent with the color gamut space of the screen.

Operation S230, if the color gamut space configured for the target interface is consistent with the color gamut space of the screen, the target interface is displayed on the screen.

Operation S231, if the color gamut space configured for the target interface is inconsistent with the color gamut space of the screen, it is detected whether a color gamut space conversion condition is met.

Operation S240, if the color gamut space conversion condition is not met, the target interface is displayed on the screen.

Operation S241, if the color gamut space conversion condition is met, a blank area in the target interface is acquired.

In one embodiment, the blank area is an area in which no file, such as image, character, or video, is displayed.

It should be noted that there are usually multiple areas for an interface of an application. For example, a area used to display content or an area where only a background color or a background image is displayed. Among them, an electronic device can obtain a blank area through a configuration file of the application. For example, in the Android system, an application is configured with a corresponding XML file. The XML file is used to describe layout of components of each interface. It is understandable that content in the interface is usually displayed by the components, and thus the electronic device may use an area other than areas where a component for displaying image content, a component for displaying video content, and a control (for example, a button control) for responding to users' touches are disposed as a blank area. For another example, in a web page, areas where image content or video content is to be introduced are usually configured with dedicated tags. For example, an "<IMG>" tag can be used to introduce a picture, and a "<video>" tag can be used to introduce a video. Thus, the electronic device can recognize an area other than areas required to be occupied by the aforementioned tag used to introduce a picture or a video as a blank area.

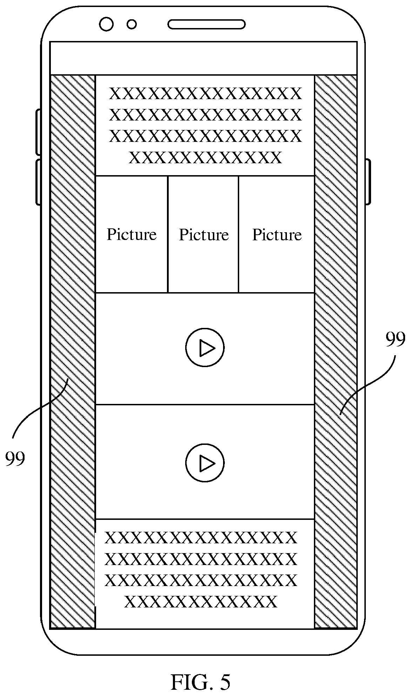

Among them, the displayed content may be picture content or video content. For example, as shown in the interface shown in FIG. 5, the interface shown in FIG. 5 includes an area 99 where no content is displayed (the shaded part in the figure) and an area where content is displayed (the non-shaded part), wherein the shaded part can be understood as a background image area of the interface. The background image can be obtained by filling in pictures, and can also be obtained by filling in colors. It is understandable that the background image in the interface is usually an area in the interface that mainly requires designing styles and colors. In the same way, the aforementioned blank area in the interface is an area that mainly requires designing styles and colors.

In this case, if whether the blank area performs color gamut conversion or whether the screen performs color gamut conversion has no effect on display effect of the blank area while color gamut conversion is still performed, it will result in that the color gamut conversion is ineffective and then cause unnecessary resource consumption. For example, if colors displayed in the blank area, when it is displayed, are all black (that is, it can be understood that an RGB value of each pixel in the blank area is 0), then although displayable color ranges corresponding to different color gamut spaces are different, the difference is very small regarding display effect of an achromatic color. Therefore, in the case that colors displayed in the blank area are all black when it is displayed, a user will not obviously perceive display effect brought about by color gamut conversion. For another example, it is similar for achromatic colors such as white and gray.

However, regarding chromatic colors, such as red, yellow, blue, green, and purple, there will be a clear difference. For example, for a specific green in the Adobe RGB color gamut, it is actually outside the color gamut of the sRGB color gamut. In this case, if the color gamut of the interface is the Adobe RGB color gamut, while that of the screen is the sRGB color gamut, it will cause the interface to fail to show the display effect as it was designed, and then cause influence on the authenticity of UI design.

Thus, in order to overcome the above problem, it is possible to determine whether to perform color gamut conversion by judging a color of a blank area.

Operation S250, it is determined whether a color included in the blank area meets a specified color condition.

Among them, the specified color condition can have multiple manners.

As one way, the specified color condition includes that: colors of the blank area include at least one chromatic color. As described in the aforementioned content, regarding chromatic colors, effect appearing in different color gamut spaces will have difference. Thus, in the case that the blank area includes at least one chromatic color, in order to ensure that the originally designed color effect can be reproduced, it is required to perform color gamut space matching, that is, to make the color gamut space of the screen be consistent with the color gamut space of the target interface.

As another way, the specified color condition includes that: a proportion of a first area in the blank area is greater than a target extent, wherein a color displayed in the first area is chromatic colors while the first area is displayed. It can be understood that color gamut conversion occurs before a target interface is rendered, that is, in a case that color gamut conversion is to be performed, rendering is performed after the color gamut conversion is completed so that it can be displayed to a user visually. Thus, the electronic device can obtain color data (for example, RGB values) of each pixel in the target interface before rendering, and then obtain color data of each pixel in the blank area, so as to identify whether the color of the pixel is a chromatic color through the color data, and then further compare the number of pixels belonging to chromatic colors with the total number of pixels in the blank area to obtain the occupation of the first area. Among them, the target extent can be set in advance, for example, set as 70% or 60%.

Operation S260, if the color included in the blank area meets the specified color condition, the color gamut space of the screen is converted to be consistent with the color gamut space configured for the target interface.

It can be understood that the target interface will be displayed on the screen after completing the color gamut space conversion.

Operation S261, if the color included in the blank area does not meet the specified color condition, no color gamut conversion is performed.

In the image information processing method provided by the present application, by the method, regardless of the kind of the color gamut space of the target interface that is to be presented, the target interface can be presented in the most realistic state, such that the user experience is improved. Moreover, before performing color gamut conversion, it is possible to determine whether to perform color gamut conversion by judging whether a color of a blank area in the target interface meets a specified color condition, such that effectivity of color gamut conversion is further improved.

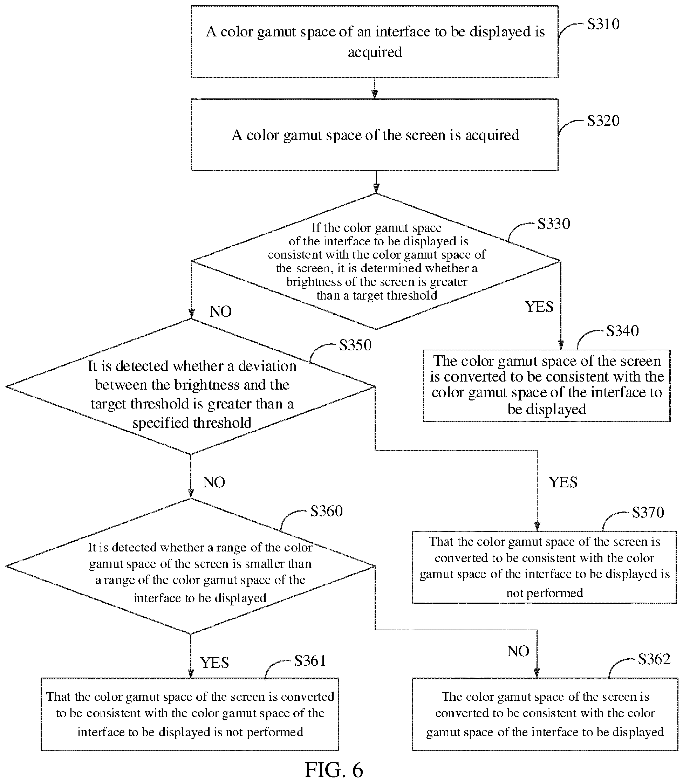

Referring to FIG. 6, an image information processing method provided by the present application is applied to an electronic device with a screen, wherein the screen supports displaying images based on multiple kinds of color gamut spaces; the method includes the follows.

Operation S310, a color gamut space of a target interface is acquired.

Operation S220, a color gamut space of the screen is acquired.

Operation S330, if the color gamut space of the target interface is consistent with the color gamut space of the screen, it is determined whether a brightness of the screen is greater than a target threshold.

Operation S340, if it is determined that the brightness of the screen is greater than the target threshold, the color gamut space of the screen is converted to be consistent with the color gamut space of the target interface.

It should be noted that when the brightness of the screen is lower than a certain brightness value, it is not particularly obvious whether the displayed interface is dim or oversaturated. Thus, if the color gamut conversion is still performed, it may cause resource waste. Therefore, only when it is recognized that the brightness of the screen is greater than the target threshold, the color gamut space of the screen is converted to be consistent with the color gamut space of the target interface, so that the performed color gamut conversion can actually play a role in improving the user experience.

As one way, the target threshold can be a current screen brightness manually set by a user. As another way, the target threshold is a screen brightness automatically set according to light intensity of a current external environment by the electronic device.

Operation S350, if the brightness of the screen is not greater than the target threshold, it is detected whether a deviation between the brightness and the target threshold is greater than a specified threshold.

It can be understood that the deviation in this embodiment represents a size of a difference between an actual brightness of the screen and the aforesaid target threshold.

As described in the foregoing content, the target threshold may be a current screen brightness manually set by a user, and may also be a screen brightness automatically set according to light intensity of a current external environment by the electronic device, or a pre-configured screen brightness of which a color change can be clearly perceived. It should be noted that a screen brightness manually set by a user is usually brighter than a brightness automatically adjusted according to ambient light by the electronic device, that is, the brightness value is higher. As one way, in a case that the electronic device recognizes that automatic adjustment of the screen brightness based on ambient light is not currently turned on, a specified threshold corresponding to the deviation is set as a first specified threshold; in a case that the electronic device recognizes that automatic adjustment of the screen brightness based on ambient light is currently turned on, a specified threshold corresponding to the deviation is set as a second specified threshold, wherein the first specified threshold is greater than the second specified threshold.

Operation S360, if the deviation is not greater than the specified threshold, it is detected whether a range of the color gamut space of the screen is smaller than a range of the color gamut space of the target interface.

Operation S361, if a range of the color gamut space of the screen is smaller than a range of the color gamut space of the target interface, that the color gamut space of the screen is converted to be consistent with the color gamut space of the target interface is not performed.

Operation S362, if a range of the color gamut space of the screen is greater than a range of the color gamut space of the target interface, that the color gamut space of the screen is converted to be consistent with the color gamut space of the target interface is performed.

It is understandable that if the range of the color gamut space of the screen is greater than the range of the color gamut space of the target interface, the interface displayed on the screen will be dimmer relative to the real situation of the target interface in a case that no color gamut space conversion is performed. However, if the range of the color gamut space of the screen is smaller than the range of the color gamut space of the target interface, the interface displayed on the screen will be more oversaturated relative to the real situation of the target interface in a case that no color gamut space conversion is performed. Thus, in a case that the deviation is not greater than the specified threshold, although a current actual brightness is lower than a screen brightness of which a color change can be clearly perceived, because the oversaturated display effect of the interface will offset with the current effect that the actual brightness that is relatively dark (darker relative to the target threshold) even if no color gamut conversion is not performed, users' visual experience will not affected too much even if no conversion is performed. Therefore, in this case, for the purpose of saving energy source, color gamut conversion may not be performed.

Operation S370, if the deviation is greater than the specified threshold, that the color gamut space of the screen is converted to be consistent with the color gamut space of the target interface is not performed.

It can be understood that if the deviation is greater than the specified threshold, it represents that the current brightness of the current screen is low, such that a user cannot effectively perceive effect brought by color gamut conversion. Thus, in this situation, for the purpose of saving energy source, color gamut conversion may not be performed.

In the image information processing method provided by the present application, by the method, regardless of the kind of the color gamut space of the target interface that is to be presented, the target interface can be presented in the most realistic state, such that the user experience is improved. Moreover, in the case that it is recognized that the color gamut space of the target interface is inconsistent with the color gamut space of the screen, it is possible to determine whether to perform color gamut conversion based on a current brightness of the current, so as to improve focalization and flexibility of conversion.

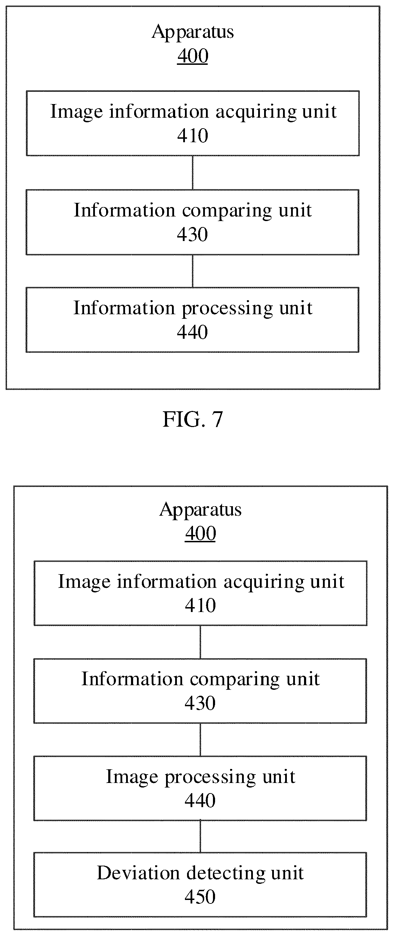

Referring to FIG. 7, the present application provides an image information processing apparatus 400 running in an electronic device with a screen, wherein the screen supports displaying images based on multiple kinds of color gamut spaces; the apparatus 400 includes the follows.

An image information acquiring unit 410 is configured to acquire a color gamut space configured for a target interface.

As one way, the image information acquiring unit 410 is specifically configured to: use a target interface by a target application as the target interface; acquire parameters in configuration information of the target application that represents a color gamut space; and use the color gamut space represented by the parameters as a color gamut space configured for the target interface.

The image information acquiring unit 410 is further configured to acquire a color gamut space of a screen.

An information comparing unit 430 is configured to compare the color gamut space of the target interface with the color gamut space of the screen.

An information processing unit 440 is configured to: if the color gamut space of the target interface is inconsistent with the color gamut space of the screen, detect whether a color gamut space conversion condition is met; and if the color gamut space conversion condition is met, convert the color gamut space of the screen to be consistent with the color gamut space of the target interface.

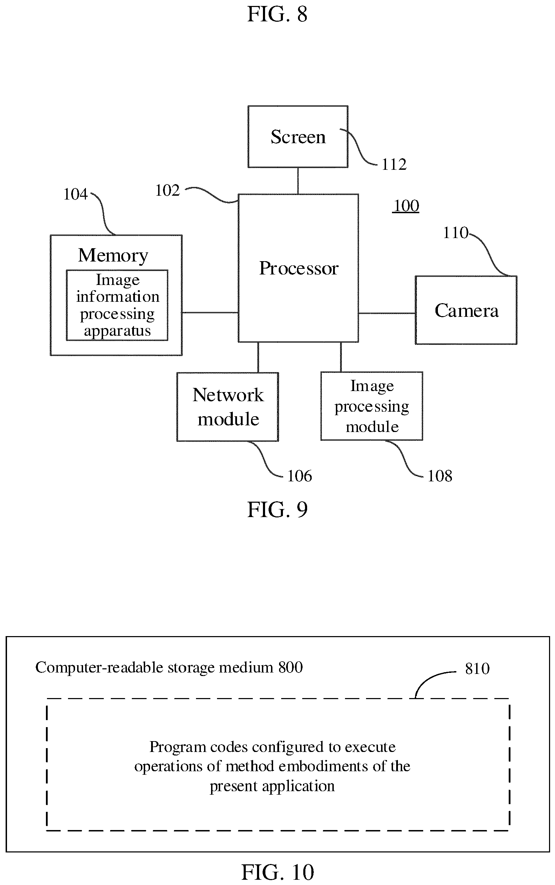

Optionally, as one way, the color gamut space conversion condition includes: identifying that a brightness of the screen is greater than a target threshold. In this embodiment, as shown in FIG. 8, the apparatus further includes a deviation detecting unit 450 configured to: if the brightness of the screen is not greater than the target threshold, detect a deviation between the brightness and the target threshold; if the deviation is not greater than a specified threshold and a range of the color gamut space of the screen is greater than a range of the color gamut space of the target interface, not perform converting the color gamut space of the screen to be consistent with the color gamut space of the target interface. If the deviation is greater than the specified threshold, the operation of converting the color gamut space of the screen to be consistent with the color gamut space of the target interface is not performed.

As another way, the color gamut space conversion condition includes: an exposure degree of the target interface is smaller than a specified exposure degree value, and the range of the color gamut space of the target interface is smaller than the range of the color gamut space of the screen; or an exposure degree of the target interface is greater than a specified exposure degree value, and the range of the color gamut space of the target interface is greater than the range of the color gamut space of the screen.

As one way, the information processing unit 440 is specifically configured to: acquire a blank area in the target interface, wherein the blank area is an area in which no content is displayed; if a color included in the blank area meets a specified color condition, convert the color gamut space of the screen to be consistent with the color gamut space configured for the target interface. Optionally, the specified color condition includes: a proportion of a first area in the blank area is greater than a target extent, wherein a color displayed in the first area is chromatic colors while the first area is displayed.

An electronic apparatus provided by the present application will be illustrated below with reference to FIG. 9.

Referring to FIG. 9, based on the aforementioned image processing method and apparatus, an embodiment of the present application further provides another electronic device 100 that can execute the aforementioned terminal control method. The electronic device 100 includes one or more (only one is shown in the figure) processor 102, a memory 104, a network module 106, an image processing module 108, a camera 110, and a screen 112 supporting displaying images based on multiple kinds of color gamut spaces, which are coupled with each other. Among them, the memory 104 stores a program that can execute the content of the aforementioned embodiments, and the processor 102 can execute the program stored in the memory 104.

Among them, the processor 102 may include one or more processing cores. The processor 102 uses various interfaces and lines to connect various parts of the entire electronic device 100, and executes various functions of the electronic device 100 and processing data by running or executing instructions, programs, code sets, or instruction sets stored in the memory 104, and calling data stored in the memory 104. Optionally, the processor 102 may use at least one kind of hardware form in Digital Signal Processing (DSP), Field-Programmable Gate Array (FPGA), and Programmable Logic Array (PLA) to realize. The processor 102 may be integrated with one or a combination of several of a central processing unit (CPU), a graphics processing unit (GPU), a modem, and the like. Among them, the CPU mainly processes an operating system, user interfaces, and applications, etc.; the GPU is used for rendering and drawing of display content; the modem is used for processing wireless communication. It can be understood that the above-mentioned modem may also not be integrated into the processor 102, but be implemented by an individual communication chip.

The memory 104 may include a random access memory (RAM), and may also include a read-only memory, for example, an image information processing apparatus may be stored in the memory 104. The image information processing apparatus may be the aforementioned apparatus 400. The memory 104 may be used to store instructions, programs, codes, code sets or instruction sets. The memory 104 may include a program storage area and a data storage area, wherein the program storage area can store instructions for implementing an operating system and instructions for implementing at least one function (such as a touch function, a sound playback function, an image playback function, etc.), and instructions used to implement the following various method embodiments, etc. The storage data area can also store data created by the terminal 100 during use (such as a phone book, audio and video data, chat record data), and the like.

The network module 106 is used to receive and transmit electromagnetic waves, realize mutual conversion between electromagnetic waves and electrical signals, so as to perform communication with a communication network or other devices, such as communication with a wireless access point. The network module 106 may include various existing circuit elements for performing these functions, for example, an antenna, a radio frequency transceiver, a digital signal processor, an encryption/decryption chip, a subscriber identity module (SIM) card, a memory, etc. The network module 106 can communicate with various networks, such as the Internet, an intranet, and a wireless network, or communicate with other devices through a wireless network. The aforementioned wireless network may include a cellular telephone network, a wireless local area network, or a metropolitan area network.

The image processing module 108 may be used to encode images collected by the camera 110, or decode data requested from the network by the network module 106, so as to transmit them to the screen 112 for display. Specifically, the image processing module 108 may be a GPU, a dedicated DSP, an FPGA, an ASIC chip, and so on.

Referring to FIG. 10, which shows a structural block diagram of a computer-readable storage medium provided by an embodiment of the present application. The computer-readable storage medium 800 stores program codes, the program codes can be called by a processor to execute the methods described in the aforementioned embodiments.

The computer-readable storage medium 800 may be an electronic memory such as a flash memory, an EEPROM (Electrically Erasable Programmable Read Only Memory), an EPROM, a hard disk, an ROM, and so on. Optionally, the computer-readable storage medium 800 includes a non-transitory computer-readable storage medium. The computer-readable storage medium 800 has storage space for program codes 810 for executing any method steps in the above-mentioned methods. These program codes can be read from one or more computer program products or written into one or more computer program products. The program code 810 may be compressed in a suitable form, for example.

In conclusion, in the image information processing method, apparatus, electronic device, and storage medium provided by the present application, by acquiring a color gamut space configured for a target interface and acquiring a color gamut space of a screen, the color gamut space configured for the target interface is compared with the color gamut space of the screen; if the color gamut space configured for the target interface is inconsistent with the color gamut space of the screen, and a color gamut space conversion condition is met, the color gamut space of the screen is converted to be consistent with the color gamut space configured for the target interface. By the method, even though the originally designed color gamut space of the target interface that is to be presented is inconsistent with that of the screen, the target interface can still be presented in the most realistic state, such that the user experience is improved.

## Claims

1. An image information processing method, comprising:
acquiring (S110, S120, S210, S220, S310, S320) a color gamut space of a target interface and a color gamut space of a screen;
in response to that the color gamut space of the target interface is inconsistent with the color gamut space of the screen, detecting (S130) whether a color gamut space conversion condition is met; and
in response to that the color gamut space conversion condition is met, acquiring (5241) a blank area in the target interface; and
in response to that a color included in the blank area meets a specified color condition, converting (S260) the color gamut space of the screen to make it consistent with the color gamut space of the target interface,
wherein the conversion of the color gamut space refers to converting from a display gamut standard to another display gamut standard; and
the color gamut space conversion condition comprises one of:
whether the resources of an electronic device of the screen allows the conversion of the color gamut space to be performed;
the electronic device having started performing the conversion of the color gamut space;
a saturation of the target interface is lower than a specified saturation value, and a color gamut space range of the target interface is smaller than a color gamut space range of a screen;
a saturation of the target interface is greater than a specified saturation value, and a color gamut space range of the target interface is greater than a color gamut space range of a screen; and
wherein
the specified color condition comprises that: a proportion of a first area in the blank area is greater than a target extent, wherein a color displayed in the first area is chromatic colors while the first area is displayed.

2. The method according to claim 1, further comprising:
if the color included in the blank area does not meet the specified color condition, not performing (S261) color gamut conversion.

3. The method according to claim 1 or claim 2, wherein the acquiring (S110, S210, S310) a color gamut space of a target interface comprises:
taking a target interface by a target application as the target interface;
acquiring parameters in configuration information of the target application that represent a color gamut space; and
taking the color gamut space represented by the parameters as the color gamut space of an target interface.

4. The method according to claim 3, wherein the target application includes an application currently running in a foreground, and the taking an target interface by a target application as the target interface comprises:
taking an interface which is switched to by the application currently running in a foreground as the target interface.

5. The method according to claim 4, further comprising:
acquiring a using list record of applications; and
identifying the most recently used application in the using list record as the application currently running in a foreground.

6. The method according to claim 3, wherein the target application includes an application to be started, and the taking a target interface by a target application as the target interface comprises:
taking an interface of a first page displayed by the application to be started after being started as the target interface.

7. The method according to any one of claims 1-6, wherein the color gamut space conversion condition comprises:
identifying (S330) that a brightness of the screen is greater than a target brightness threshold.

8. The method according to claim 7, further comprising:
in response to that the brightness of the screen is not greater than the target brightness threshold, detecting (S350) a deviation between the brightness and the target brightness threshold;
in response to that the deviation is not greater than a specified deviation threshold, and a range of the color gamut space of the screen is smaller than a range of the color gamut space of the target interface, not performing (S370) the converting the color gamut space of the screen to be consistent with the color gamut space of the target interface; and
if the deviation is not greater than a specified deviation threshold, and a range of the color gamut space of the screen is not less than a range of the color gamut space of the target interface, performing (S362) the converting the color gamut space of the screen to be consistent with the color gamut space of the target interface.

9. The method according to claim 8, wherein the target brightness threshold comprises a current brightness of the screen or a screen brightness set according to light intensity of a current external environment by the electronic device.

10. The method according to claim 9, further comprising:
if the deviation is not greater than a deviation specified threshold, not performing (S370) the converting the color gamut space of the screen to be consistent with the color gamut space of the target interface.

11. An image information processing apparatus (400), comprising:
an image information acquiring unit (410) configured to acquire a color gamut space of a target interface and a color gamut space of a screen;
an information comparing unit (420) configured to: in response to that the color gamut space of the target interface is inconsistent with the color gamut space of the screen, detect whether a color gamut space conversion condition is met; and
an information processing unit (430) configured to: in response to that the color gamut space conversion condition is met, acquire (S241) a blank area in the target interface;
and in response to that a color included in the blank area meets a specified color condition, convert (S260) the color gamut space of the screen to make it consistent with the color gamut space of the target interface,
wherein the conversion of the color gamut space refers to converting from a display gamut standard to another display gamut standard; and
the color gamut space conversion condition comprises one of:
Whether the resources of an electronic device of the screen allowing the conversion of the color gamut space to be performed;
the electronic device having started performing the conversion of the color gamut space;
a saturation of the target interface is lower than a specified saturation value, and a color gamut space range of the target interface is smaller than a color gamut space range of a screen;
a saturation of the target interface is greater than a specified saturation value, and a color gamut space range of the target interface is greater than a color gamut space range of a screen; and
wherein the the specified color condition comprises that: a proportion of a first area in the blank area is greater than a target extent, wherein a color displayed in the first area is chromatic colors while the first area is displayed.

12. A computer-readable storage medium (800) storing program codes (810), wherein the program codes (810), when being run by a processor, execute the method according to any one of claims 1-10.

## Patentansprüche

1. Bildinformationsverarbeitungsverfahren, das Folgendes umfasst:
Erfassen (S110, S120, S210, S220, S310, S320) eines Farbgamutraums einer Zielschnittstelle und eines Farbgamutraums eines Bildschirms;
in Reaktion darauf, dass der Farbgamutraum der Zielschnittstelle mit dem Farbgamutraum des Bildschirms nicht konsistent ist, Detektieren (S130), ob eine Farbgamutraumumwandlungsbedingung erfüllt ist; und
in Reaktion darauf, dass die Farbgamutraumumwandlungsbedingung erfüllt ist, Erfassen (S241) eines leeren Bereichs in der Zielschnittstelle und
in Reaktion darauf, dass eine im leeren Bereich beinhaltete Farbe eine spezifizierte Farbbedingung erfüllt, Umwandeln (S260) des Farbgamutraums des Bildschirms, um ihn mit dem Farbgamutraum der Zielschnittstelle konsistent zu machen,
wobei sich die Umwandlung des Farbgamutraums auf das Umwandeln von einem Anzeigengamutstandard zu einem anderen Anzeigengamutstandard bezieht; und
die Farbgamutraumumwandlungsbedingung eines von Folgendem umfasst:
ob die Ressourcen einer elektronischen Vorrichtung des Bildschirms eine Durchführung der Umwandlung des Farbgamutraums erlauben;
die elektronische Vorrichtung hat mit dem Durchführen der Umwandlung des Farbgamutraums begonnen;
eine Sättigung der Zielschnittstelle ist geringer als ein spezifizierter Sättigungswert und ein Farbgamutraumumfang der Zielschnittstelle ist kleiner als ein Farbgamutraumumfang eines Bildschirms;
eine Sättigung der Zielschnittstelle ist größer als ein spezifizierter Sättigungswert und ein Farbgamutraumumfang der Zielschnittstelle ist größer als ein Farbgamutraumumfang eines Bildschirms und
wobei
die spezifizierte Farbbedingung umfasst, dass: ein Anteil eines ersten Bereichs im leeren Bereich größer ist als eine Zielausdehnung, wobei eine im ersten Bereich angezeigte Farbe chromatische Farben ist, während der erste Bereich angezeigt wird.

2. Verfahren nach Anspruch 1, das ferner Folgendes umfasst:
wenn die im leeren Bereich beinhaltete Farbe die spezifizierte Farbbedingung nicht erfüllt, kein Durchführen (S261) einer Farbgamutumwandlung.

3. Verfahren nach Anspruch 1 oder Anspruch 2, wobei das Erfassen (S110, S210, S310) eines Farbgamutraums einer Zielschnittstelle Folgendes umfasst:
Übernehmen einer Zielschnittstelle durch eine Zielanwendung als die Zielschnittstelle;
Erfassen von Parametern in Auslegungsinformationen der Zielanwendung, die einen Farbgamutraum repräsentieren; und
Übernehmen des Farbgamutraums, der durch die Parameter repräsentiert wird, als den Farbgamutraum einer Zielschnittstelle.

4. Verfahren nach Anspruch 3, wobei die Zielanwendung eine Anwendung beinhaltet, die derzeit in einem Vordergrund läuft, und das Übernehmen einer Zielschnittstelle durch eine Zielanwendung als die Zielschnittstelle Folgendes umfasst:
Übernehmen einer Schnittstelle, zu der durch die derzeit in einem Vordergrund laufende Anwendung umgeschaltet wird, als die Zielschnittstelle.

5. Verfahren nach Anspruch 4, das ferner Folgendes umfasst:
Erfassen einer Nutzungslistenaufzeichnung von Anwendungen und
Identifizieren der zuletzt verwendeten Anwendung in der Nutzungslistenaufzeichnung als die Anwendung, die derzeit in einem Vordergrund läuft.

6. Verfahren nach Anspruch 3, wobei die Zielanwendung eine zu startende Anwendung beinhaltet und das Übernehmen einer Zielschnittstelle durch eine Zielanwendung als die Zielschnittstelle Folgendes umfasst:
Übernehmen einer Schnittstelle einer ersten Seite, die von der zu startenden Anwendung angezeigt wird, nachdem sie gestartet wurde, als die Zielschnittstelle.

7. Verfahren nach einem der Ansprüche 1-6, wobei die Farbgamutraumumwandlungsbedingung Folgendes umfasst:
Identifizieren (S330), dass eine Helligkeit des Bildschirms größer ist als ein Zielhelligkeitsschwellenwert.

8. Verfahren nach Anspruch 7, das ferner Folgendes umfasst:
in Reaktion darauf, dass die Helligkeit des Bildschirms nicht größer ist als der Zielhelligkeitsschwellenwert, Detektieren (S350) einer Abweichung zwischen der Helligkeit und dem Zielhelligkeitsschwellenwert;
in Reaktion darauf, dass die Abweichung nicht größer ist als ein spezifizierter Abweichungsschwellenwert und ein Umfang des Farbgamutraums des Bildschirms kleiner ist als ein Umfang des Farbgamutraums der Zielschnittstelle, kein Durchführen (S370) der Umwandlung des Farbgamutraums des Bildschirms, um ihn mit dem Farbgamutraum der Zielschnittstelle konsistent zu machen; und
wenn die Abweichung nicht größer ist als ein spezifizierter Abweichungsschwellenwert und ein Umfang des Farbgamutraums des Bildschirms nicht geringer ist als ein Umfang des Farbgamutraums der Zielschnittstelle, Durchführen (S362) der Umwandlung des Farbgamutraums des Bildschirms, um ihn mit dem Farbgamutraum der Zielschnittstelle konsistent zu machen.

9. Verfahren nach Anspruch 8, wobei der Zielhelligkeitsschwellenwert eine aktuelle Helligkeit des Bildschirms oder eine Bildschirmhelligkeit umfasst, die gemäß einer Lichtintensität einer aktuellen Außenumgebung von der elektronischen Vorrichtung eingestellt wurde.

10. Verfahren nach Anspruch 9, das ferner Folgendes umfasst:
wenn die Abweichung nicht größer ist als ein spezifizierter Abweichungsschwellenwert, kein Durchführen (S370) des Umwandelns des Farbgamutraums des Bildschirms, um ihn mit dem Farbgamutraum der Zielschnittstelle konsistent zu machen.

11. Bildinformationsverarbeitungseinrichtung (400), die Folgendes umfasst:
eine Bildinformationserfassungseinheit (410), die dazu ausgelegt ist, einen Farbgamutraum einer Zielschnittstelle und einen Farbgamutraum eines Bildschirms zu erfassen;
eine Informationsvergleichseinheit (420), die zu Folgendem ausgelegt ist: in Reaktion darauf, dass der Farbgamutraum der Zielschnittstelle mit dem Farbgamutraum des Bildschirms nicht konsistent ist, Detektieren, ob eine Farbgamutraumumwandlungsbedingung erfüllt ist; und
eine Informationsverarbeitungseinheit (430), die zu Folgendem ausgelegt ist: in Reaktion darauf, dass die Farbgamutraumumwandlungsbedingung erfüllt ist, Erfassen (S241) eines leeren Bereichs in der Zielschnittstelle;
und in Reaktion darauf, dass eine im leeren Bereich beinhaltete Farbe eine spezifizierte Farbbedingung erfüllt, Umwandeln (S260) des Farbgamutraums des Bildschirms, um ihn mit dem Farbgamutraum der Zielschnittstelle konsistent zu machen,
wobei sich die Umwandlung des Farbgamutraums auf das Umwandeln von einem Anzeigengamutstandard zu einem anderen Anzeigengamutstandard bezieht; und
die Farbgamutraumumwandlungsbedingung eines von Folgendem umfasst:
ob die Ressourcen einer elektronischen Vorrichtung des Bildschirms eine Durchführung der Umwandlung des Farbgamutraums erlauben;
die elektronische Vorrichtung hat mit dem Durchführen der Umwandlung des Farbgamutraums begonnen;
eine Sättigung der Zielschnittstelle ist geringer als ein spezifizierter Sättigungswert und ein Farbgamutraumumfang der Zielschnittstelle ist kleiner als ein Farbgamutraumumfang eines Bildschirms;
eine Sättigung der Zielschnittstelle ist größer als ein spezifizierter Sättigungswert und ein Farbgamutraumumfang der Zielschnittstelle ist größer als ein Farbgamutraumumfang eines Bildschirms und
wobei die spezifizierte Farbbedingung umfasst, dass: ein Anteil eines ersten Bereichs im leeren Bereich größer ist als eine Zielausdehnung, wobei eine im ersten Bereich angezeigte Farbe chromatische Farben ist, während der erste Bereich angezeigt wird.

12. Computerlesbares Speichermedium (800), auf dem Programmcodes (810) gespeichert sind, wobei die Programmcodes (810), wenn sie von einem Prozessor ausgeführt werden, das Verfahren nach einem der Ansprüche 1-10 umsetzen.

## Revendications

1. Procédé de traitement d'informations d'image, comprenant :
l'acquisition (S110, S120, S210, S220, S310, S320) d'un espace de gamme de couleurs d'une interface cible et d'un espace de gamme de couleurs d'un écran ;
en réponse au fait que l'espace de gamme de couleurs de l'interface cible est incompatible avec l'espace de gamme de couleurs de l'écran, la détection (S130) du fait qu'une condition de conversion d'espace de gamme de couleurs est satisfaite ; et
en réponse au fait que la condition de conversion d'espace de gamme de couleurs est satisfaite, l'acquisition (S241) d'une zone vierge dans l'interface cible ; et
en réponse au fait qu'une couleur incluse dans la zone vierge satisfait à une condition de couleur spécifiée, la conversion (S260) de l'espace de gamme de couleurs de l'écran pour le rendre compatible avec l'espace de gamme de couleurs de l'interface cible,
la conversion de l'espace de gamme de couleurs faisant référence à la conversion d'une norme de gamme d'affichage en une autre norme de gamme d'affichage ; et
la condition de conversion d'espace de gamme de couleurs comprenant l'une des situations suivantes :
les ressources d'un dispositif électronique de l'écran permettent ou non l'exécution de la conversion de l'espace de gamme de couleurs ;
le dispositif électronique a démarré l'exécution de la conversion de l'espace de gamme de couleurs ;
la saturation de l'interface cible est inférieure à une valeur de saturation spécifiée, et l'espace de gamme de couleurs de l'interface de cible est plus petit que l'espace de gamme de couleurs d'un écran ;
la saturation de l'interface cible est supérieure à une valeur de saturation spécifiée, et l'espace de gamme de couleurs de l'interface de cible est plus grand que l'espace de gamme de couleurs d'un écran ; et
la condition de couleur spécifiée comprenant le fait qu'une proportion d'une première zone de la zone vierge est plus grande que l'étendue d'une cible, une couleur affichée dans la première zone étant une couleur chromatique pendant que la première zone est affichée.

2. Procédé selon la revendication 1, comprenant en outre :
si la couleur incluse dans la zone vierge ne satisfait pas à la condition de couleur spécifiée, la non-exécution (S261) de la conversion de gamme de couleurs.

3. Procédé selon la revendication 1 ou la revendication 2, dans lequel l'acquisition (S110, S210, S310) d'un espace de gamme de couleurs d'une interface cible comprend :
la considération d'une interface cible par une application cible en tant qu'interface cible ;
l'acquisition de paramètres dans des informations de configuration de l'application cible qui représentent un espace de gamme de couleurs ; et
la considération de l'espace de gamme de couleurs représenté par les paramètres en tant qu'espace de gamme de couleurs d'une interface cible.

4. Procédé selon la revendication 3, dans lequel l'application cible inclut une application en cours d'exécution au premier plan, et la considération d'une interface cible par une application cible en tant qu'interface cible comprend :
la considération en tant qu'interface cible d'une interface sur laquelle bascule l'application en cours d'exécution au premier plan.

5. Procédé selon la revendication 4, comprenant en outre :
l'acquisition d'un enregistrement de liste d'utilisation d'applications ; et
l'identification de l'application la plus récemment utilisée dans l'enregistrement de liste d'utilisation en tant qu'application en cours d'exécution au premier plan.

6. Procédé selon la revendication 3, dans lequel l'application cible inclut une application à démarrer, et la considération d'une interface cible par une application cible en tant qu'interface cible comprend :
la considération en tant qu'interface cible d'une interface d'une première page affichée par l'application à démarrer après son démarrage.

7. Procédé selon l'une quelconque des revendications 1 à 6, dans lequel la condition de conversion d'espace de gamme de couleurs comprend :
l'identification (S330) du fait qu'une brillance de l'écran est supérieure à un seuil de brillance cible.

8. Procédé selon la revendication 7, comprenant en outre :
en réponse au fait que la brillance de l'écran n'est pas supérieure à au seuil de brillance cible, la détection (S350) d'un écart entre la brillance et le seuil de brillance cible ;
en réponse au fait que l'écart n'est pas supérieur à un seuil d'écart spécifié, et que l'espace de gamme de couleurs de l'écran est plus petit que l'espace de gamme de couleurs de l'interface cible, la non-exécution (S370) de la conversion de l'espace de gamme de couleurs de l'écran pour qu'il soit compatible avec l'espace de gamme de couleurs de l'interface cible ; et
si l'écart n'est pas supérieur à un seuil d'écart spécifié, et que l'espace de gamme de couleurs de l'écran n'est pas plus petit que l'espace de gamme de couleurs de l'interface cible, l'exécution (S362) de la conversion de l'espace de gamme de couleurs de l'écran pour qu'il soit compatible avec l'espace de gamme de couleurs de l'interface cible.

9. Procédé selon la revendication 8, dans lequel le seuil de brillance cible comprend une brillance courante de l'écran ou une brillance d'écran paramétré par le dispositif électronique en fonction de l'intensité lumineuse d'un environnement externe actuel.

10. Procédé selon la revendication 9, comprenant en outre :
si l'écart n'est pas supérieur à un seuil d'écart spécifié, la non-exécution (S370) de la conversion de l'espace de gamme de couleurs de l'écran pour qu'il soit compatible avec l'espace de gamme de couleurs de l'interface cible.

11. Dispositif de traitement d'informations d'image (400), comprenant :
une unité d'acquisition d'informations d'image (410) configurée pour acquérir un espace de gamme de couleurs d'une interface cible et un espace de gamme de couleurs d'un écran ;
une unité de comparaison d'informations (420) configurée pour : en réponse au fait que l'espace de gamme de couleurs de l'interface cible est incompatible avec l'espace de gamme de couleurs de l'écran, détecter qu'une condition de conversion d'espace de gamme de couleurs est satisfaite ; et
une unité de traitement d'informations (430) configurée pour : en réponse au fait que la condition de conversion d'espace de gamme de couleurs est satisfaite, acquérir (S241) une zone vierge dans l'interface cible ;
et en réponse au fait qu'une couleur incluse dans la zone vierge satisfait à une condition de couleur spécifiée, convertir (S260) l'espace de gamme de couleurs de l'écran pour le rendre compatible avec l'espace de gamme de couleurs de l'interface cible,
la conversion de l'espace de gamme de couleurs faisant référence à la conversion d'une norme de gamme d'affichage en une autre norme de gamme d'affichage ; et
la condition de conversion d'espace de gamme de couleurs comprenant l'une des situations suivantes :
les ressources d'un dispositif électronique de l'écran permettent ou non l'exécution de la conversion de l'espace de gamme de couleurs ;
le dispositif électronique a démarré l'exécution de la conversion de l'espace de gamme de couleurs ;
la saturation de l'interface cible est inférieure à une valeur de saturation spécifiée, et l'espace de gamme de couleurs de l'interface de cible est plus petit que l'espace de gamme de couleurs d'un écran ;
la saturation de l'interface cible est supérieure à une valeur de saturation spécifiée, et l'espace de gamme de couleurs de l'interface de cible est plus grand que l'espace de gamme de couleurs d'un écran ; et
dans lequel la condition de couleur spécifiée comprend le fait qu'une proportion d'une première zone de la zone vierge est plus grande que l'étendue d'une cible, une couleur affichée dans la première zone étant une couleur chromatique pendant que la première zone est affichée.

12. Support de stockage lisible par ordinateur (800) stockant des codes de programme (810), les codes de programme (810), lorsqu'ils sont exécutés par un processeur, mettant en œuvre le procédé selon l'une quelconque des revendications 1 à 10.
